# EUROPEAN PATENT SPECIFICATION

(11) **EP 2 452 851 B1**
(45) Date of publication and mention of the grant of the patent: **19.02.2014**
(21) Application number: 10191180.8
(22) Date of filing: 15.11.2010
(51) Int. Cl.: B60N 2/60

(54) **Sun shield for a seating surface of a seat in a vehicle**
Sonnenblende für eine Sitzoberfläche eines Sitzes in einem Fahrzeug
Parasoleil pour surface d'assise d'un siège dans un véhicule

(43) Date of publication of application: 16.05.2012
(73) Proprietor: National Electric Vehicle Sweden AB, 461 38 Trollhättan (SE)
(72) Inventor: Carlberger, Thomas, 461 78, SJUNTORP (SE)
(74) Representative: Edlund, Fabian

(56) References cited:
- DE-U1- 20 010 784
- GB-A- 190 321 946
- US-A- 4 118 066
- US-A- 4 790 592
- US-A- 5 522 639
- US-A- 5 655 810
- US-A- 6 158 805
- US-B1- 6 637 815

## Description

### Technical field

The present invention relates to a sun shield for a seating surface of a seat in a vehicle and to a method for shielding the seating surface, (see, for example, US 4,790,592 A, corresponding to the preamble of independent product claim 1).

### Background art

When vehicles, such as, e.g., cars, lorries (trucks), and helicopters are parked, the seats of the vehicles tend to be heated by the sun. Such a heated seat is uncomfortable to sit on, especially if the seating area of the seat is made of, e.g., leather. Furthermore, if the person sitting on the seat is somewhat lightly dressed wearing, e.g., shorts and a short-sleeved top, a short dress, or perhaps only beachwear, the discomfort in sitting on a heated seat is even worse. Some persons solve this problem by laying a towel on the heated seat to shield from the worst heat. Alternatively the towel is placed on the seat by the person just before leaving the vehicle. However, the towel on the seat is an ugly sight. Furthermore, if the vehicle is a convertible and the roof is retracted, the towel can be blown away by a wind gust. Additionally, not all persons remember to bring a towel.

### Summary of the invention

In view of the above, an objective of the invention is to solve or at least reduce one or several of the drawbacks discussed above. Generally, the above objective is achieved by the attached independent patent claims.

According to a first aspect as defined by the features set forth in claim 1, the present invention is carried out by a sun shield for a seating surface of a seat in a vehicle. The sun shield comprises a blind having a base part, a connecting end and a shielding part which connects the base part and the connecting end, wherein the base part is attached to a first part of the seat, wherein the blind has an extracted position and a retracted position, wherein in the extracted position of the blind the connecting end is attached to a second part of the seat such that the shielding part extends over the seating surface, thereby shielding the seating surface from sunlight incident on the shielding part, and wherein in the retracted position of the blind, the connecting end is not attached to the second part of the seat.

The sun shield is advantageous in that it prevents the seating surface of the seat from being heated and uncomfortable to sit on during sunny days. Furthermore, it is advantageous that the sun shield is arranged in the vehicle which implies that it cannot be misplaced nor forgotten. Furthermore, the sun shield gives a neater impression than, e.g., a towel would.

The vehicle may be a convertible automobile. It is advantageous to have the sun shield in a convertible since the sun shield is not blown away by a wind gust as a towel would be. Furthermore, as a convertible with a retracted roof provides a good view of the seat, it is clearly advantageous that the sun shield provides a neater impression than, e.g., a towel would.

The shielding part may comprise a printed area. The print may, e.g., be advertisement or a beautiful image. This is advantageous in that the aesthetic appearance is improved even more.

The connecting end comprises two hooks for connection with the second part of the seat. This is advantageous in that the connecting of the connecting end to the second end of the seat is easy to use.

The seat which the sunshield is arranged to shield may comprise a seat cushion, a backrest, and a headrest, wherein the first part of the seat may be an underside of the seat cushion and wherein the second part of the seat may be a part of the headrest. This is advantageous in that when the blind is in its retracted position, it does not disturb the person sitting on the seat.

The seat which the sunshield is arranged to shield may comprise a seat cushion, a backrest, and a headrest, wherein the first part of the seat may be a part of the headrest and wherein the second part of the seat may be an underside of the seat cushion. This implies that the base part is attached to the part of the headrest. Furthermore, in the extracted position of the blind the connecting end is attached to the underside of the seat cushion.

According to a second aspect as defined by the steps set forth in claim 5, the present invention is carried out by a method for shielding a seating surface of a seat in a vehicle. The method comprises: attaching a blind to a first part of the seat, the blind having a base part, a connecting end, and a shielding part which connects the base part and the connecting end, wherein the base part is attached to the first part of the seat, setting the blind in an extracted position, wherein in the extracted position the connecting end is attached to a second end of the seat such that the shielding part extends above the seating surface, thereby shielding the seating surface from sunlight incident on the shielding part.

It is to be noted that the second aspect can be embodied in accordance with the first aspect. Furthermore, the advantages of the first aspect apply to the second aspect as well.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief Description of the Drawings

Other features and advantages of the present invention will become apparent from the following detailed description of a presently preferred embodiment, with reference to the accompanying drawings, in which
Fig. 1 is a perspective view of a seat to which an inventive sun shield in its retracted position has been attached.
Fig. 2 is a perspective view of the seat and the inventive sun shield of Fig. 1, wherein the sun shield is in its extracted position.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

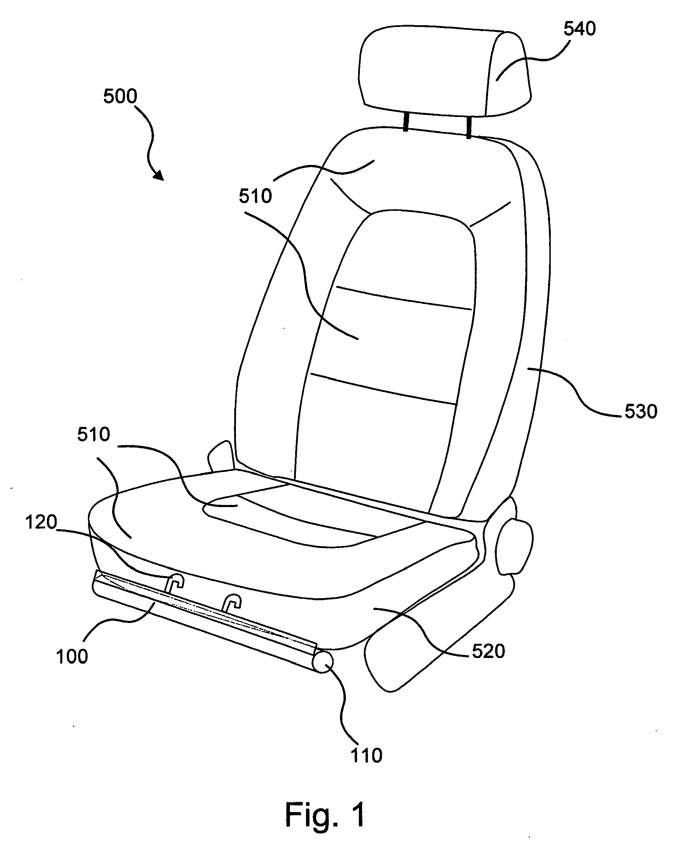

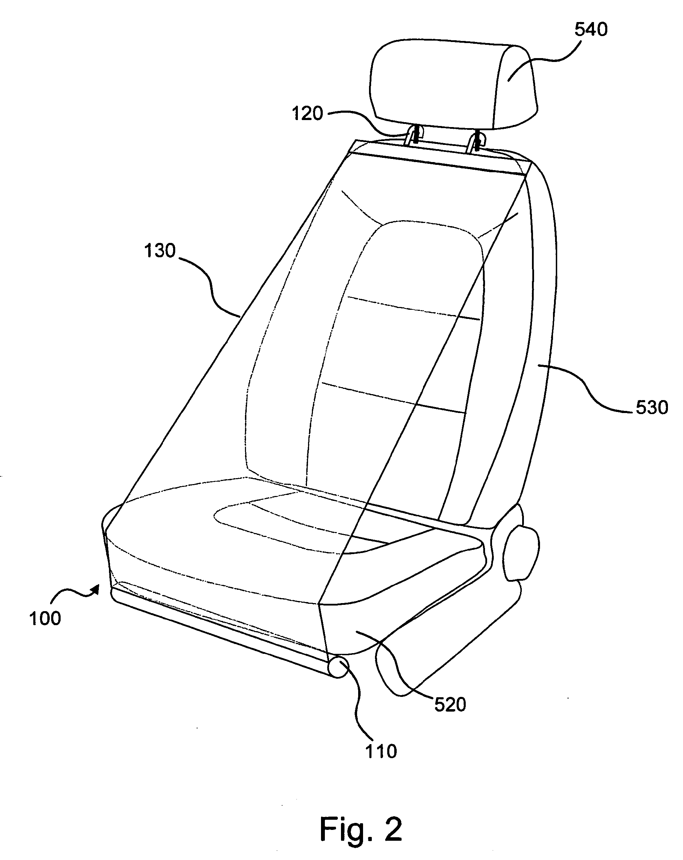

Figs. 1 and 2 disclose the inventive sun shield attached to a seat 500. The sun shield is adapted to shield a seating surface 510 of the seat 500 from incoming sunlight.

The sun shield comprises a blind 100 having a base part 110, a connecting end 120 and a shielding part 130 which connects the base part 110 and the connecting end 120. The blind 100 has an extracted position, Fig. 2, and a retracted position, Fig. 1. In the extracted position, the shielding part 130 extends over the seating surface 510, thereby shielding the seating surface 510 from sunlight incident on the shielding part 130.

The seat 500 is to be arranged in a vehicle, e.g., a car, a lorry (truck), or a helicopter. The car can, e.g., be a convertible automobile. The sun shield can be attached to one of the seats in the vehicle, all seats, or a few of the seats.

The seat 500 comprises a seat cushion 520, a backrest 530, and a headrest 540. In Figs. 1 and 2, the sun shield is attached to the seat cushion 520. More particularly, the base part 110 is attached to an underside of the seat cushion 520. In one embodiment, the base part 110 is instead attached to a lower part of the front side of the seat cushion 520.

The connecting end 120 comprises two hooks for connection with the head rest 540. In the extracted position, the blind 110 is extracted and the hooks are connected to the head rest 540, as may be seen particularly clearly in Fig. 2.

In an alternative embodiment (not shown), the base part 110 is attached to the headrest 540, preferably to a backside of the headrest 540. In the extracted position, the blind 110 is extracted and the connecting end 120 is attached to an underside of the seat cushion 520.

The shielding part 130 can comprise a printed area. The printed area can, e.g., comprise a beautiful image, a text/logo, and/or advertising. As an alternative, or combined with the shielding part 130 having a printed area, the shielding part 130 can have a colour and/or appearance which matches the colour and/or appearance of the seat 500 so that the sun shield and the seat 500 blend.

The shielding part 130 can, e.g., be made of a synthetic material. The synthetic material can, e.g., be nylon.

In the following, the inventive method will be described with reference to Figs. 1 and 2.

The need for shielding the seating surface from sun most often occurs when the vehicle is parked. The driver and/or a passenger extracts the blind and attaches the connecting end, by hooking it, to the headrest. Thus, the shielding surface is extracted and the seating surface of the seat is shielded from direct sun radiation.

Before driving/flying away, the connecting end is unhooked, the blind is retracted, preferably automatically, and the driver and/or passenger can sit down on the seat.

## Claims

1. Sun shield for a seating surface (510) of a seat (500) suitable for a vehicle comprising:
a blind (100) having a base part (110), a connecting end (120) and a shielding part (130) which connects the base part (110) and the connecting end (120),
wherein the base part (110) is attached to a first part of the seat (500),
wherein the blind (100) has an extracted position and a retracted position,
wherein in the extracted position of the blind (100) the connecting end (120) is attached to a second part of the seat (500) such that the shielding part (130) extends over the seating surface (510), thereby shielding the seating surface (510) from sunlight incident on the shielding part (130), and
wherein in the retracted position of the blind (100), the connecting end (120) is not attached to the second part of the seat (500),
**characterised in that** the connecting end (120) comprises two hooks for connection with the second part of the seat (500).

2. Sun shield according to claim 1, wherein the shielding part (130) comprises a printed area.

3. Sun shield according to claim 1 or 2, wherein the base part (110) is attached to an underside of a seat cushion (520) of the seat (500), and the connecting end (120) is attached to a part of a headrest (540) of the seat (500).

4. Sun shield according to claim 1 or 2, wherein the base part (110) is attached to a part of a headrest (540) of the seat (500), and the connecting end (120) is attached to an underside of a seat cushion (520) of the seat (500).

5. Method for shielding a seating surface (510) of a seat (500) suitable for a vehicle comprising the steps of:
attaching a blind (100) to a first part of the seat, the blind having a base part (110), a connecting end (120), the connecting end having two hooks for connection with a second part of the seat, and a shielding part (130) which connects the base part (110) and the connecting end (120), wherein the base part is attached to the first part of the seat; and
setting the blind (100) in an extracted position, wherein in the extracted position the connecting end is attached to the second part of the seat (500) such that the shielding part (130) extends above the seating surface (510), thereby shielding the seating surface from sunlight incident on the shielding part.

## Patentansprüche

1. Sonnenblende für eine Sitzoberfläche (510) eines Sitzes (500), die für ein Fahrzeug geeignet ist, die Folgendes aufweist:
einen Schirm (100), der einen Basisteil (110), ein Verbindungsende (120) und einen Blendenteil (130) hat, der den Basisteil (110) und das Verbindungsende (120) verbindet,
wobei der Basisteil (110) an einem ersten Teil des Sitzes (500) befestigt ist,
wobei der Schirm (100) eine herausgezogene Position und eine eingezogene Position aufweist,
wobei das Verbindungsende (120) in der herausgezogenen Position des Schirms (100) an einem zweiten Teil des Sitzes (500) derart befestigt ist, dass sich der Blendenteil (130) über die Sitzoberfläche (510) erstreckt und dadurch die Sitzoberfläche (510) vor Sonnenlicht, das auf den Blendenteil (130) einfällt, abschirmt,
wobei das Verbindungsende (120) in der zurückgezogenen Position des Schirms (100) nicht an dem zweiten Teil des Sitzes (500) befestigt ist,
**dadurch gekennzeichnet, dass** das Verbindungsende (120) zwei Haken zum Verbinden mit dem zweiten Teil des Sitzes (500) aufweist.

2. Sonnenblende nach Anspruch 1, wobei der Blendenteil (130) einen bedruckten Bereich aufweist.

3. Sonnenblende nach einem der Ansprüche 1 oder 2, wobei der Basisteil (110) an einer Unterseite eines Sitzkissens (520) des Sitzes (500) befestigt ist, und das Verbindungsende (120) an einem Teil einer Kopfstütze (540) des Sitzes (500) befestigt ist.

4. Sonnenblende nach einem der Ansprüche 1 oder 2, wobei der Basisteil (110) an einem Teil einer Kopfstütze (540) des Sitzes (500) befestigt ist, und das Verbindungsende (120) an einer Unterseite eines Sitzkissens (520) des Sitzes (500) befestigt ist.

5. Verfahren zum Abschirmen einer Sitzoberfläche (510) eines Sitzes (500), das für ein Kraftfahrzeug geeignet ist, das die folgenden Schritte aufweist:
Befestigen eines Schirms (100) an einem ersten Teil des Sitzes, wobei der Schirm einen Basisteil (110), ein Verbindungsende (120), wobei das Verbindungsende zwei Haken zum Verbinden mit einem zweiten Teil des Sitzes aufweist, und einen Blendenteil (130), der den Basisteil (110) und das Verbindungsende (120) verbindet, hat, wobei der Basisteil an dem ersten Teil des Sitzes befestigt ist, und
Einstellen des Schirms (100) in einer herausgezogenen Position, wobei das Verbindungsende in der herausgezogenen Position an dem zweiten Teil des Sitzes (500) derart befestigt ist, dass sich der Blendenteil (130) oberhalb der Sitzoberfläche (510) erstreckt und dadurch die Sitzoberfläche vor Sonnenlicht, das auf den Blendenteil fällt, abschirmt.

## Revendications

1. Parasoleil pour une surface d'assise (510) d'un siège (500) adapté pour un véhicule, comprenant :
un store (100) ayant une partie de base (110), une extrémité de jonction (120) et une partie-écran (130) reliant la partie de base (110) et l'extrémité de jonction (120) ;
dans lequel la partie de base (110) est fixée à une première partie du siège (500) ;
dans lequel le store (100) a une position sortie et une position rétractée ;
dans lequel dans la position sortie du store (100), l'extrémité de jonction (120) est fixée à une seconde partie du siège (500) de telle sorte que la partie-écran (130) s'étend au-dessus de la surface d'assise (510), protégeant ainsi la surface d'assise (510) de la lumière solaire percutant la partie-écran (130) ; et
dans lequel dans la position rétractée du store (100), l'extrémité de jonction (120) n'est pas fixée à la seconde partie du siège (500) ;
**caractérisé en ce que** l'extrémité de jonction (120) comprend deux crochets à relier à la seconde partie du siège (500).

2. Parasoleil selon la revendication 1, dans lequel la partie-écran (130) comprend une zone imprimée.

3. Parasoleil selon la revendication 1 ou 2, dans lequel la partie de base (110) est fixée à un côté inférieur d'un coussin de siège (520) du siège (500) et dans lequel l'extrémité de jonction (120) est fixée à une partie d'un appuie-tête (540) du siège (500).

4. Parasoleil selon la revendication 1 ou 2, dans lequel la partie de base (110) est fixée à une partie d'un appuie-tête (540) du siège (500) et dans lequel l'extrémité de jonction (120) est fixée à un côté inférieur d'un coussin de siège (520) du siège (500).

5. Procédé de protection d'une surface d'assise (510) d'un siège (500) adapté pour un véhicule, comprenant les étapes consistant à :
fixer un store (100) à une première partie du siège, le store ayant une partie de base (110), une extrémité de jonction (120), l'extrémité de jonction ayant deux crochets pouvant être reliés à une seconde partie du siège, ainsi qu'une partie-écran (130) reliant la partie de base (110) et l'extrémité de jonction (120), dans lequel la partie de base est fixée à la première partie du siège ; et
placer le store (100) dans une position sortie, dans lequel dans la position sortie, l'extrémité de jonction est fixée à la seconde partie du siège (500) de telle sorte que la partie-écran (130) s'étend au-dessus de la surface d'assise (510), protégeant ainsi la surface d'assise de lumière solaire percutant la partie-écran.
